# EUROPEAN PATENT APPLICATION

(11) **EP 1 160 655 A2**
(43) Date of publication of application: **05.12.2001**
(21) Application number: 01303812.0
(22) Date of filing: 26.04.2001
(51) Int. Cl.: G06F 3/06, G06F 9/445

(54) **Recordable optical disc and apparatus therefor including operating system and user configuration**

(30) Priority: 22.05.2000 KR 2000027499
(71) Applicant: SAMSUNG ELECTRONICS Co. Ltd., Kyungki-do, Seoul (KR)
(72) Inventor: Ko, Jung-wan, Yongin-si, Gyeonggi-do (KR); Kim, Byung-jun, Paldal-gu, Suwon-si, Gyeonggi-do (KR)
(74) Representative: Chugg, David John

(57) **Abstract**

A recordable optical disc (100) containing various operating systems and user configurations and an apparatus therefor are provided. The optical disc (100) has a system region in which data is read by a computer and a user cannot record data and a data region in which data can be recorded, in which at least one operating system and information thereof are recorded in the system region and user configuration setting information having configuration variables of users, who use the computer, is recorded in the data region. The optical disc (100) records various operating systems, application programs and user configurations so that multiple users can use various types of computers or game systems.

## Description

The present invention relates to a recordable optical disc and an apparatus therefor, and more particularly, to a recordable optical disc containing various operating systems and user configurations, and an apparatus therefor.

When a user desires to use an operating system and a computer or game system using the operating system, various preliminary works (installing a program and setting configurations) are needed. Data made in this system cannot be used in a computer or game system having different configurations, or requires another preliminary works.

The operation of the conventional computer or game system is as follows:
(1) For a computer, a user installs one operating system in his computer and makes data using needed programs.
(2) For a game system, a user buys a dedicated game software and uses the game system.

In the case of '(1)', there are various kinds of computers, including IBM PC, Apple Mac, Unix Machine (HP, SUN, etc.), and there are also various kinds of operating systems, including MS series (Windows, Windows NT, etc.), Unix series (HP-UX, Solaris, etc.), Linux series (RedHad, FreeBSD, etc.), OS/2, BeOS, etc. There are more various kinds of program products for each operating system. Data made in this various environments are indescribably abundant. In some cases, different types of data can be processed in one system, but in most cases, different types of data cannot be processed in one system, because of different operating systems, or different program languages, or because of a media which is not supported, or because of lack of a program which is supported.

In some cases, different types of data can be processed in one system, but need preliminary works again because of different user configurations. In these cases, a job which takes just several minutes takes several times longer than usual.

This causes another problem to each manufacturer. Particularly, companies, which develop and produce operating systems and programs, have to develop and produce each operating system and program for a corresponding system, which causes overlaps. In addition, consumers have to buy each operating system and program.

As for game systems, a media which a game system does not support cannot be operated at all in the game system. Though a media which the game system supports, a different version program cannot be executed. If a user changes a game system, all types of already bought software become useless. The user has to prepare media supported by the new game system. Since software developers have to repeatedly develop and sell software for each game system, development costs and losses in sales and distribution increase.

With a view to solve or reduce the above problems, it is an aim of embodiments of the present invention to provide an optical disc which can be used in an apparatus supporting the optical disc regardless of types of machines and apparatuses, after recording operating systems and user configurations.

It is another aim to provide an apparatus appropriate to the optical disc.

According to a first aspect of the invention, there is provided an optical disc having a system region in which data is read by a computer and a user cannot record data; and a data region in which data can be recorded, in which at least one operating system and information thereof are recorded in the system region and user configuration setting information having configuration variables of users, who use the computer, is recorded in the data region.

Preferably, the user configuration setting information includes information on the types of application programs, which the user used on the operating system, and data files generated by the application programs.

According to a second aspect of the invention, there is provided a computer supporting an optical disc containing a computer operating system, the computer comprising: a central processing unit (CPU); a random-access-memory (RAM) for storing a boot program and operating system controlling the CPU; an optical disc player for reading the operating system from the optical disc; a boot program storage medium for storing a boot program which controls the booting operation of the computer and contains at least a driver of the optical disc player and a loader program for controlling the optical disc player to read the operating system and load the operating system on the RAM; and a linker having information on the location in which the boot program is recorded, the linker which reads the boot program from the boot program storage medium, referring to the location information, and loads the boot program on the RAM.

Preferably, a plurality of operating systems are recorded on the optical disc, the computer has an input device for receiving user's input, and the boot program receives a selection input for selecting one of operating systems recorded on the optical disc, from the user, reads the selected operating system from the optical disc and loads the operating system on the RAM.

Preferably, user configuration setting information containing configuration variables used by the user is recorded on the optical disc, and the operating system loads the application program used by the user, to the computer, referring to the user configuration setting information.

For a better understanding of the invention, and to show how embodiments of the same may be carried into effect, reference will now be made, by way of example, to the accompanying diagrammatic drawings in which:
Figure 1 shows the structure of an optical disc according to an embodiment of the present invention;
Figure 2 is a block diagram of the structure of an apparatus according to an embodiment of the present invention;
Figure 3 is a flowchart of a booting operation of the apparatus of Figure 2;
Figure 4 is a schematic diagram of the operation of a linker of Figure 2;
Figure 5 is a schematic diagram of a process for storing user configuration setting in the apparatus of Figure 2;
Figure 6 shows an example in which multiple users use the apparatus of Figure 2, using the user configuration setting of Figure 5; and
Figure 7 shows a case in which the optical disc of Figure 1 is applied to a game system.

The present invention is not restricted to the following embodiments, and many variations are possible within the scope of the present invention. The embodiments of the present invention are provided in order to more completely explain the present invention to anyone skilled in the art.

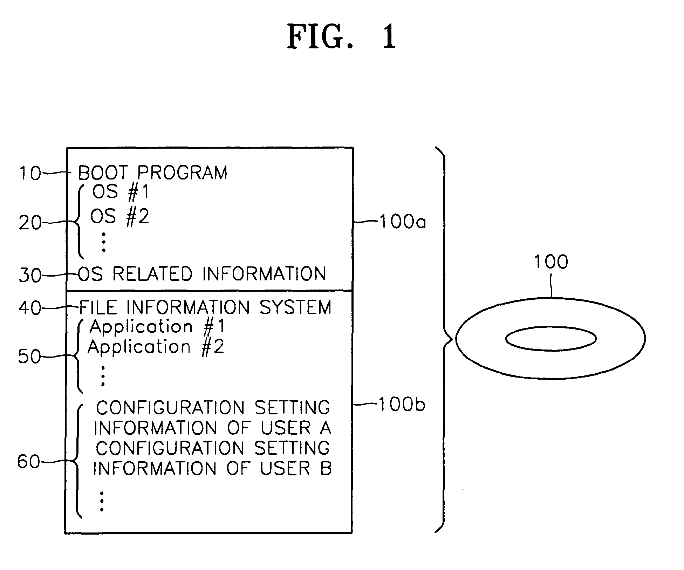

Figure 1 shows the structure of an optical disc according to the present invention. As shown in Figure 1, the optical disc 100 has a system region 100A and a data region 100B. A user cannot write data in the system region 100A but can write data in the data region 100B.

In the system region 100A, a boot program 10, operating systems 20, and operating system-related information 30 are recorded.

In the data region 100B, file system information 40, programs 50, and user configuration information 60 are recorded.

Since a plurality of operating systems 20 and a plurality of programs 50 that are read by a computer and manage the operation of the computer, are recorded on the optical disc shown in Figure 1, the optical disc can be used appropriately depending on user configurations.

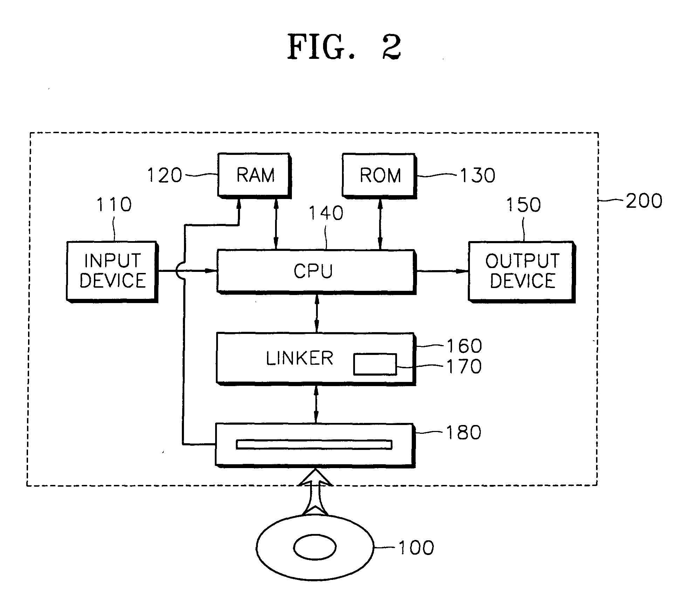

Figure 2 is a block diagram of the structure of an apparatus according to the present invention.

The apparatus of Figure 2 has an input device 110, a RAM 120, a ROM 130, a CPU 140, an output device 150, a linker 160, a boot program storage device 170, and an optical disc player 180. Here, the optical disc player 180 is for reproducing data from and recording data on an optical disc 100, and corresponds to a boot device 180 in the summary of the present invention.

The input device 110 is for receiving signals for selection, commands, data, etc., provided by a user, and can be implemented by a keyboard, a mouse, etc. The RAM 120 stores a program for controlling the operation of the CPU 140 and data used in the program.

The output device 150 is for displaying the processing result of the computer 200, and can be implemented by a monitor, a printer, etc.

The linker 160 checks the system configuration of the computer and loads the operating system stored in the optical disc 100 to the computer 200 when the computer is booted. Referring to location information of a boot program, which is internally stored, the linker 160 reads the boot program stored in the boot program storage device 170 and loads the boot program on the RAM 120.

The boot program includes a priority table, a driver for controlling the optical disc player 180, and a loader program which controls the optical disc player 180 to read an operating system from the optical disc 100 and load the operating system on the RAM 120.

On the optical disc 100, the boot program, file system information and operating system information are recorded.

If the boot program can be executed in a plurality of boot devices, it is displayed to the user that the boot program can be executed in the plurality of boot devices. Then, a selected operating system is fetched from the selected boot device and loaded on the RAM 120.

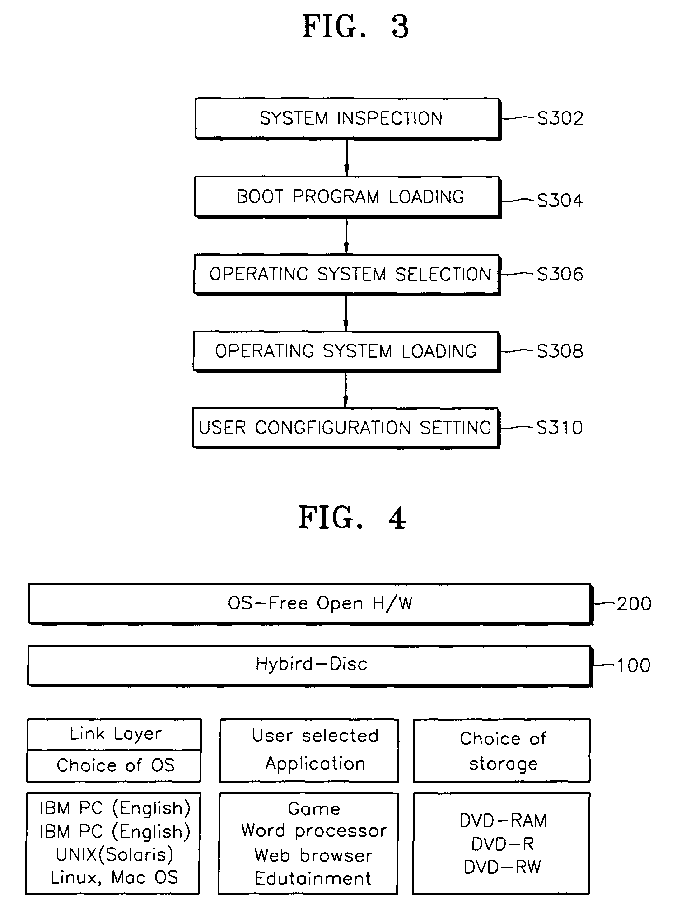

Figure 3 is a flowchart of a booting operation of the apparatus of Figure 2.

First, the computer is turned on, the linker 160 checks the system in step S302.

The linker 160 check the installation states and problems of various peripheral devices connected to the computer, such as a mouse, keyboard, monitor, graphic card, printer, speaker, game system, audio system, power management system, floppy disc controller, hard disc controller, etc., and generates a list (hardware list) containing these devices. If there is a problem in this process, the linker 160 indicates an error to the user and stops operation, and if there is no problem, the next process which is a boot program loading step is performed. For example, if the keyboard is not installed or has a problem, the linker 160 displays a keyboard error and stops operation.

From the boot program loading step S304, the steps are different from those of an ordinary personal computer. First, the linker 160 reads the boot program and loads the program on the RAM 120. The boot program stored inside the linker 160 is used. Here, the boot program can be stored in the ROM 130, the hard disc, etc. But, the linker 160 should know the location of the boot program and be able to access the boot program.

The boot program contains a priority table, an optical disc player driver, and a loader program. In a predetermined location of the optical disc 100, which is accessed using the optical disc player driver, the boot sector location and information on a file system and operating system are described.

According to the indication by the loader program, the user selects an operating system in step S308. After the computer 200 confirms that the file system used in the optical disc 100 is supported, the computer 200 informs the user of data collected in the plurality of optical discs 100, for example, in a plurality of boot devices and optical discs, and make the user select one operating system 20. If only one operating system is recorded, this operating system is automatically selected.

If the user selects an optical disc and an operating system, the selected operating system 20 is read from the optical disc 100 and loaded on the RAM 120 in step S308. Here, the boot program passes the hardware list generated in the system checking step S302, to the operating system. Based on this list, the operating system finds and install a driver file necessary to each device.

After the operating system is loaded, a necessary user configuration is set up using user configuration setting information recorded in the data region 100B of the optical disc 100 in step S310. After obtaining configuration variables, such as application programs used by the user and data files generated by the application programs, from the user configuration setting information 60, necessary application programs are executed.

That is, whatever configuration a computer may have, the user can obtain the same operating system and user configuration and update the user configuration appropriately to changes. The user configuration setting information contains information on the application program used by the user and data files generated using the application programs.

Figure 4 is a schematic diagram of the operation of a linker of Figure 2. In Figure 4, various operating systems and application programs are recorded on the optical disc 100. The optical disc is operated in the computer 200 having an open structure shown in Figure 2.

The linker 160 selects one among various operating systems, for example, IBM PC (Korean), IBM PC (English), UNIX (Solaris), Linux, Mac Os, etc., and loads the selected operating system to the computer 200. Applications programs selected by the user, for example, game programs, word processor, web browser, edutainment (a coined word of education and entertainment), are executed by the loaded operating system.

Meanwhile, the user selects one among various boot devices, for example, a DVD-RAM player, a DVD-R player, and a DVD-RW player, and data is reproduced from and recorded on the optical disc 100 by the selected boot device.

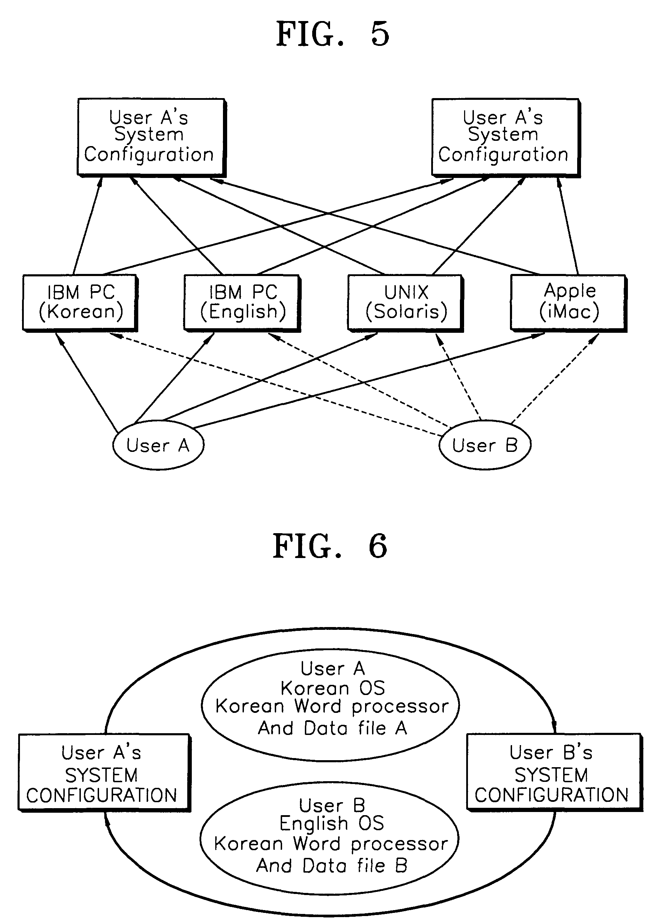

Figure 5 is a schematic diagram of a process for storing user configuration setting in the apparatus of Figure 2. The user can use the optical disc 100 shown in Figure 1 on various platforms and operating systems, and information on the kinds of application programs used by the user, and data files generated by the application programs is recorded in the user configuration setting information. Therefore, if only the user has the optical disc 100, the user can do his job on any computer having any operating systems.

Figure 6 shows an example in which multiple users use the apparatus of Figure 2, using the user configuration setting of Figure 5. User A uses a Korean operating system and a Korean word processor, and has data file A generated by the Korean word processor. These configuration variables are recorded in the data region 100B of user A's system configuration optical disc 100.

Meanwhile, user B uses an English operating system, an English word processor, and has data file B generated by the English word processor. These configuration variables are recorded in the data region 100B of user B's system configuration optical disc 100.

In using the apparatus of Figure 2, user A can do his job using user A's system configuration, and likewise, user B can do his job using user B's system configuration.

Therefore, each of various users can use a common disc for doing his own job.

Likewise, using the apparatus of Figure 2 enables various users do their jobs without setting individual configuration.

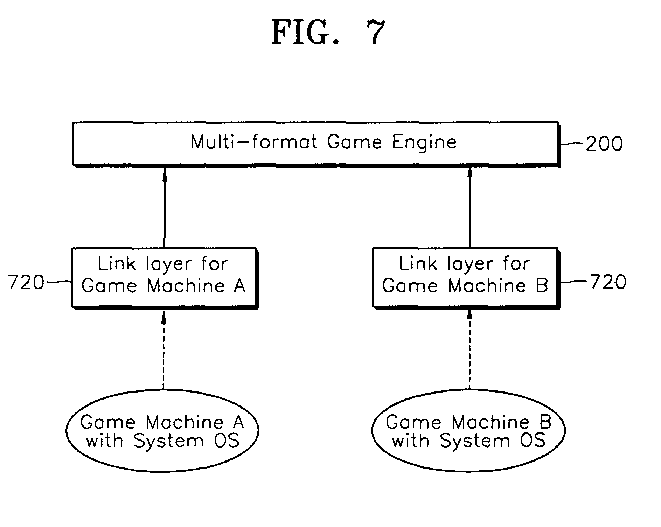

Figure 7 shows a case in which the optical disc of Figure 1 is applied to a game system. The game engine 710 of the game system can have various formats. Similarly to the linker 160 of the apparatus of Figure 2, a linker 720 loads an appropriate operating system and game programs to the game engine 710 so that various game systems can operate with only one optical disc.

As described above, the optical disc records various operating systems, application programs and user configurations so that multiple users can use various types of computers or game systems.

The apparatus has an optical disc player for reproducing an optical disc, which supports an open structure and various operating systems, and therefore multiple users can easily use various operating systems.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. An optical disc comprising:
a system region in which data is read by a computer and a user cannot record data; and
a data region in which data can be recorded,
wherein at least one operating system and information thereof are recorded in the system region and user configuration setting information having configuration variables of users, who use the computer, is recorded in the data region.

2. The optical disc of claim 1, wherein the user configuration setting information (60) includes information on the types of application programs, which the user used on the operating system, and data files generated by the application programs.

3. A computer supporting an optical disc (100) containing a computer operating system, the computer comprising:
a central processing unit (CPU) (140);
a random-access-memory (RAM) (120) for storing a boot program and operating system controlling the CPU;
an optical disc player (180) for reading the operating system (20) from the optical disc (100);
a boot program storage medium (170) for storing a boot program which controls the booting operation of the computer and contains at least a driver of the optical disc player and a loader program for controlling the optical disc player to read the operating system and load the operating system on the RAM; and
a linker (160) having information on the location in which the boot program is recorded, the linker which reads the boot program from the boot program storage medium, referring to the location information, and loads the boot program on the RAM (120).

4. The computer of claim 3, wherein a plurality of operating systems are recorded on the optical disc (100), the computer has an input device (110) for receiving user's input, and the boot program receives a selection input for selecting one of operating systems recorded on the optical disc (100), from the user, reads the selected operating system from the optical disc (100) and loads the operating system on the RAM.

5. The optical disc of claim 2, wherein user configuration setting information containing configuration variables used by the user is recorded on the optical disc (100), and the operating system loads the application program used by the user, to the computer, referring to the user configuration setting information.
